# EUROPEAN PATENT APPLICATION

(11) **EP 3 232 662 A1**
(43) Date of publication of application: **18.10.2017**
(21) Application number: 15867004.2
(22) Date of filing: 30.10.2015
(51) Int. Cl.: H04N 13/02, G03B 15/08, F41H 3/00

(54) **OPTICAL INVISIBLE DEVICE**

(30) Priority: 08.12.2014 CN 201410741189
(71) Applicant: Beijing ANTVR Technology Co., Ltd., Beijing 100083 (CN)
(72) Inventor: QIN, Zheng, Beijing 100083 (CN)
(74) Representative: Gardiner, Stephen Robin
(86) International application number: PCT/CN2015/093332
(87) International publication number: WO 2016/091031

(57) **Abstract**

The present disclosure provides an optical cloaking device. The optical cloaking device sequentially comprises along an incident direction of an optical path: a first microlens array for imaging, an imaging unit, a display screen, and a second microlens array for projecting content displayed by the display screen to the outside, and further comprises an image processing unit. In addition, there is further provided another optical cloaking device, which comprises: a first microlens array for imaging, a first imaging unit, a first image processing unit, a first display screen, and a second microlens array that are located at a first side, and a third microlens array, a second imaging unit, a second image processing unit, a second display screen, and a fourth microlens array that are located at a second side. The optical cloaking device of the present disclosure has advantages of being capable of adapting to cloaking devices of target objects of different shapes, and displaying an image with a three-dimensional effect, etc.

## Description

### TECHNICAL FIELD

The present disclosure relates to a cloaking device, and more particularly, to an optical cloaking device.

### BACKGROUND

Cloaking technologies have drawn more and more attention and are gradually known to people, and are the most widely used in military fields. In the aspect of optical cloaking, the existing cloaking technology is still mainly military camouflage or the like. However, as the background environment changes, this technology will no longer have a cloaking effect, and thus it is just a camouflage technology. There is also a technology in which a light ray is guided to the other side from one side by virtue of optical fiber so as to bypass an object in the middle, this manner is relatively demanding for an optical fiber process, needs a large quantity of optical fibers, and is high in complexity and susceptible to interference. In addition, there is a cloaking device that shoots an object at one side and then displays it on the other side through a simple camera and a display screen, and the existing display screen is a hard screen which is in lack of stereoscopic sense and poor in cloaking effect, and thus cannot adapt to objects of different shapes.

Therefore, an optical cloaking device having stereoscopic effect image display and capable of adapting to target objects of different shapes is needed.

### SUMMARY

An objective of the present disclosure is to provide an optical cloaking device. The optical cloaking device sequentially comprising along an incident direction of an optical path: a first microlens array for imaging, an imaging unit, a display screen, and a second microlens array for projecting the content displayed by the display screen to the outside, and further comprising an image processing unit. wherein the first microlens array comprises a plurality of microlens units configured to focus a light beam from an external real scene; the imaging unit is arranged on a focal plane of the first microlens array and is used for photosensitive images forming by using optical signals collected by the first microlens array; the image processing unit is configured to acquire image data sensed by the imaging unit to obtain real scene images of different depths of field and display the real scene images on the display screen; the display screen is arranged on a focal plane of the second microlens array and is configured to display an image processed by the image processing unit; the second microlens array is configured to project an image displayed on the display screen to the outside.

A target needing to be cloaked is positioned between the imaging unit and the display screen, and signal or data among the imaging unit, the image processing unit and the display screen are mutually transmitted in a wired or wireless manner.

In another aspect of the present application, provided is an optical cloaking device, comprising: a first microlens array for imaging, a first imaging unit, a first image processing unit, a first display screen, and a second microlens array that are located at a first side; and a third microlens array, a second imaging unit, a second image processing unit, a second display screen, and a fourth microlens array that are located at a second side.

Wherein the first microlens array comprises a plurality of microlens units configured to focus a light beam from an external real scene of the first side; the first imaging unit is arranged on a focal plane of the first microlens array and is used for photosensitive images forming using an optical signal collected by the first microlens array; the first image processing unit is configured to acquire image data sensed by the first imaging unit to obtain real scene images of different depths of field and display the real scene images on the second display screen; the first display screen is configured to display an image processed by the second image processing unit; the second microlens array is configured to project the image displayed on the first display screen to the outside of the first side.

The third microlens array comprises a plurality of microlens units configured to focus a light beam from an external real scene of the second side; the second imaging unit is arranged on a focal plane of the third microlens array and is used for photosensitive image forming using an optical signal collected by the third microlens array; the second image processing unit is configured to acquire image data sensed by the second imaging unit to obtain real scene images of different depths of field and display the real scene images on the first display screen; the second display screen is configured to display an image processed by the first image processing unit; the fourth microlens array is configured to project the image displayed on the second display screen to the outside of the second side.

A target needing to be cloaked is positioned between the first side and the second side, and signal or data among the first imaging unit, the first image processing unit, the first display screen, the second imaging unit, the second image processing unit and the second display screen are mutually transmitted in a wired or wireless manner.

Preferably, a shape of the microlens unit is a circle, a regular hexagon or a rectangle.

Preferably, the first imaging unit or the second imaging unit comprises a plurality of imaging subunits, each imaging subunit is respectively set as corresponding to each microlens unit of the first microlens array or the third microlens array, and each imaging subunit and a microlens unit corresponding to the imaging subunit constitute a first module.

Preferably, the first display screen or the second display screen comprises a plurality of display subunits, each display subunit is respectively set as corresponding to each microlens unit of the second microlens array or the fourth microlens array, and each display subunit and a microlens unit corresponding to the display subunit constitute a second module.

Preferably, the first module and the second module are spaced from each other in staggered arrangement.

Preferably, the first module connects the second module by means of a hinge or in a flexible manner.

Preferably, the first display screen or the second display screen is flexible.

Preferably, the imaging unit and the display screen form a closed loop.

Preferably, each element positioned at the first side and each element positioned at the second side form a closed loop.

In conclusion, the optical cloaking device of the present disclosure implements a real-time cloaking effect for different objects, has better adaptability to shapes of the objects, has a cloaking effect highly consistent with the real environment, also has a three-dimensional effect, and thus can be widely used in military fields and civilian fields.

It should be understood that the foregoing general description and the following detailed description are exemplary illustration and explanation, and should not be used as limitations on contents claimed by the present disclosure.

### BRIEF DESCRIPTION OF THE DRAWING

More objectives, functions and advantages of the present disclosure will be elucidated from following description of the embodiments of the present disclosure with reference to the appended accompanying drawings.
Fig. 1 schematically illustrates a first implementation of an optical cloaking device according to the present disclosure;
Fig. 2(a) schematically illustrates a second implementation of an optical cloaking device according to the present disclosure;
Fig. 2(b) schematically illustrates a structural diagram of an optical cloaking device according to another embodiment of the second implementation;
Fig. 2(c)- Fig. 2(d) schematically illustrate a structural diagram of an optical cloaking device according to another embodiment of the second implementation;
Fig. 2(e)- Fig. 2(f) schematically illustrate a structural diagram of an optical cloaking device according to another embodiment of the second implementation;
Fig. 3(a) illustrates a partial enlarged drawing of hinge connection of different modules in Fig. 2(f); and
Fig. 3(b) illustrates a schematic diagram of a ring-shaped cloaking device.

### DETAILED DESCRIPTION OF THE EMBODIMENTS

The objectives and functions of the present disclosure and methods used for implementing these objectives and functions will be set forth by referring to exemplary embodiments. However, the present disclosure is not limited to the exemplary embodiments disclosed hereinafter, and can be implemented in different forms. The essence of the specification is only to help those skilled in the art to comprehensively understand the specific details of the present disclosure.

Hereinafter, the embodiments of the present disclosure will be described with reference to the accompanying drawings. The same reference numerals in the accompanying drawings indicate the same or similar components.

The present disclosure provides an optical cloaking device 100, through which a real-time cloaking effect may be implemented and objects of any shape may be cloaked thoroughly.

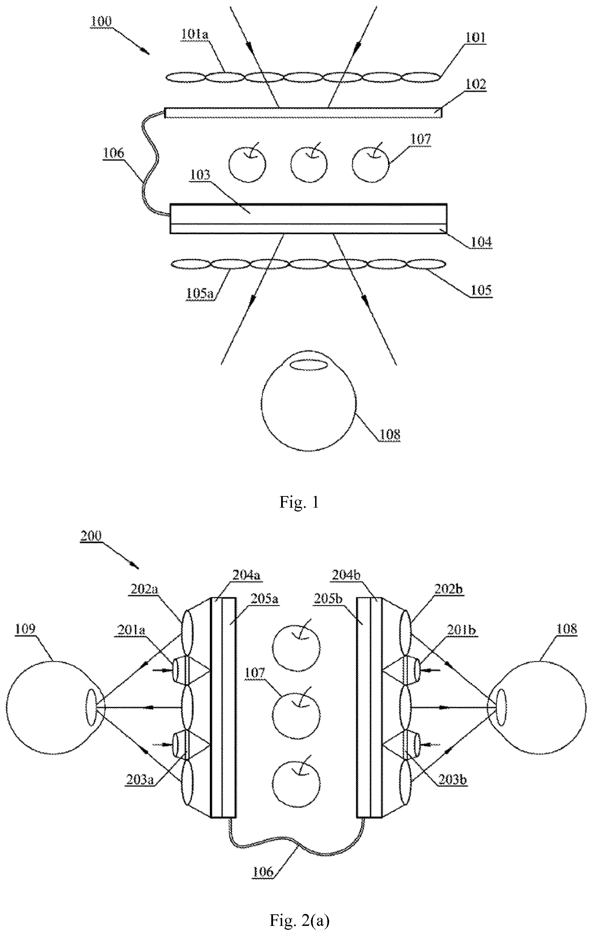

Fig. 1(a) illustrates a first implementation of an optical cloaking device according to the present disclosure. As shown in Fig. 1, the optical cloaking device 100 sequentially includes along an incident direction of an optical path: a first microlens array 101 for imaging, an imaging unit 102, an image processing unit 103, a display screen 104, and a second microlens array 105 for projecting content displayed by the display screen 104 to the outside. A target needing to be cloaked is positioned between the imaging unit 102 and the display screen 104, and signal or data among the imaging unit 102, the image processing unit 103 and the display screen are mutually transmitted in a wired or wireless manner.

The first microlens array 101 includes a plurality of first microlens units 101a configured to focus a light beam. According to an embodiment of the present disclosure, the shape of the microlens may be designed as a circle, a regular hexagon or a rectangle, etc. External light rays enter into the imaging unit 102 through the first microlens array 101 for photosensitive image forming.

The imaging unit 102 is arranged on a focal plane of the first microlens array 101 and is used for photosensitive image forming. A sensor of the imaging unit 102 may be, for example, CCD or CMOS for receiving an imaging light intensity signal, converting the imaging light intensity signal into an electric signal and storing the electric signal. A combination of the imaging unit 102 and the first microlens array 101 implements functions of a simple light field camera, and may obtain real scene images of different depths of field in greater range. The imaging unit 102 includes a plurality of imaging subunits, each imaging subunit is respectively set as corresponding to each microlens unit 101a of the first microlens array 101.

The image processing unit 103 is configured to acquire image data sensed by the imaging unit 102 and process the data. The image processing unit 103 may connect the imaging unit 102 via a data line 106 or wirelessly for communicating, further display images of different depths of field as required, and then display in real time, the processed image on the display screen 104 so that an eye 108 of a user may watch. According to an embodiment of the present disclosure, certain space exists between the image processing unit 103 and the imaging unit 102. The space is used for placing a target object needing to be cloaked, for example, an apple 107 in Fig. 1(a).

The display screen 104 is arranged on a focal plane of the second microlens array 105 and configured to display a real scene image in real time, and the display screen 104 may be an LCD, an LED or an OLED. Preferably, the image processing unit 103 and the display screen 104 are sequentially pasted together in parallel to constitute an integral part, thereby effectively reducing occupied space.

The second microlens array 105 includes a plurality of second microlens units 101a for displaying and is configured to diverge and amplify an image displayed on the display screen 104 and then project the image to the outside, for example, project the image to the eye 108 of the user. Preferably, the focal plane of the second microlens array 105 coincides with a plane where the display screen 104 is, and in this way, it can be ensured that all of the transmitted light rays are parallel light rays.

A target needing to be cloaked is positioned between the imaging unit 102 and the display screen 104, and signal or data among the imaging unit 102, the image processing unit 103 and the display screen 104 are mutually transmitted in a wired or wireless manner.

The above first implementation of the present disclosure adopts a structure that one side is used for image pickup and the other side is used for displaying, but the structure haves a cloaking effect only when viewing from a limited angle direction. For example, the cloaking device and the apple 107 needing to be cloaked are not seen unless from the viewing direction of the eye 108 as shown in Fig. 1(a).

Fig. 2(a)-Fig. 2(e) illustrate a second implementation of an optical cloaking device according to the present disclosure, which differs from the first implementation in that the second implementation adopts a structure capable of image pickup and displaying simultaneously at a single side, thereby enlarging the visual angle and range of the first implementation. The cloaking device in the second implementation has cloaking effects when viewing from multiple angles and multiple directions.

As shown in Fig. 2(a), an optical cloaking device 200 includes: a first microlens array for imaging 201a, a first imaging unit 203a, a first image processing unit 205a, a first display screen 204a, and a second microlens array 202a that are located at a first side (for example, the left side in Fig. 2(a)), and a third microlens array 201b, a second imaging unit 203b, a second image processing unit 205b, a second display screen 204b, and a fourth microlens array 202b that are located at a second side (for example, the right side in Fig. 2(a)).

The first microlens array 201 a comprises a plurality of microlens units configured to focus a light beam from an external real scene of the first side. The first imaging unit 203a is arranged on a focal plane of the first microlens array 201 a and is used for photosensitive image forming using an optical signal collected by the first microlens array 201a. The first image processing unit 205a is configured to acquire image data sensed by the first imaging unit 203a to obtain real scene images of different depths of field and display the real scene images on the second display screen 204b at the other side (namely, the second side). The first display screen 204a is configured to display an image processed by the second image processing unit 205b at the other side. The second microlens array 202a is configured to project the image displayed on the first display screen 204a to the outside of the first side. The third microlens array 201b comprises a plurality of microlens units configured to focus a light beam from an external real scene of the second side. The second imaging unit 203b is arranged on a focal plane of the third microlens array 201b and is used for photosensitive image forming using an optical signal collected by the third microlens array 201b. The second image processing unit 205b is configured to acquire image data sensed by the second imaging unit 203b to obtain real scene images of different depths of field and display the real scene images on the first display screen 204a at the other side. The second display screen 204b is configured to display an image processed by the first image processing unit 205a at the other side. The fourth microlens array 202b is configured to project the image displayed on the second display screen 204b to the outside of the second side.

Specifically, as shown in Fig. 2(a), the first microlens array 201 a is arranged ahead of the first imaging unit 203a, the first imaging unit 203a and the second microlens array 202a are spaced from each other in staggered arrangement, and the first display screen 204a is arranged at the rear of the second microlens array 202a. The first display screen 204a may be an all-in-one display screen and may be divided into different display subunits to correspond to each second microlens array 202a.

A target 107 needing to be cloaked is positioned between the first side and the second side, and signal or data among the first imaging unit 203a, the first image processing unit 205a, the first display screen 204a, the second imaging unit 203b, the second image processing unit 205b and the second display screen 204b are mutually transmitted in a wired or wireless manner.

An arrangement relationship between the first side structure and the second side structure of the optical cloaking device 200 actually is a mirror image arrangement. In addition, the first imaging unit 203a and the second microlens array 202a and the second imaging unit 203b and the fourth microlens array 202b may be spaced from each other in staggered arrangement on the same plane. Thus the optical cloaking device not only implements image shoot and display uniformity, but also has the advantages of compact structure, etc.

As can be seen from the above, the cloaking devices mutually connected with a data line 106 are in mirror image arrangement at two sides of the object (the apple 107 as shown in Fig. 2(a)) needing to be cloaked respectively, and thus the cloaking effect may be implemented when the apple 107 is viewed from two directions (namely viewing directions of the eye 108 and the eye 109). Likewise, the cloaking effect may also be implemented when viewing from multiple angles and multiple directions.

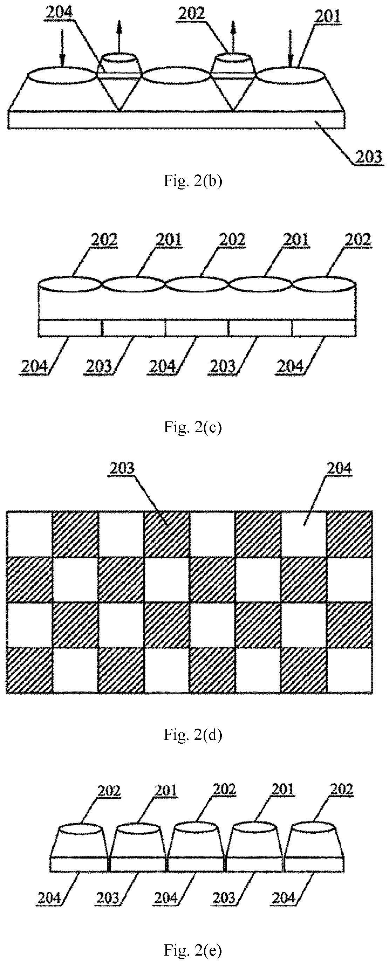

Fig. 2(b) illustrates another alternative arrangement manner of the above optical cloaking device 200, which can also implement an equivalent effect. The cloaking device as shown in Fig. 2(b) differs from the optical cloaking device 200 described in Fig. 2(a) in that a position between the imaging unit 203 and the display screen 204 is replaced, a plurality of microlens units 201 for image pickup and the display screen 204 are spaced from each other in staggered arrangement, and the microlens units 202 for displaying are arranged above the display screen 204.

Specifically, as shown in Fig. 2(b), the first side is taken as an example, the first microlens array 201 is arranged ahead of the first imaging unit 203, and the first imaging unit 203 may be an all-in-one imaging unit, and is divided into different imaging subunits to correspond to each first microlens array 201. The first microlens array 201 and various display subunits of the first display screen 204 are spaced from each other in staggered arrangement, and the first display screen 204 is arranged in the rear of the second microlens array 202.

The optical cloaking devices as shown in Fig. 2(c) and Fig. 2(d) differ from the optical cloaking device as described in Fig. 2(b) in that the imaging unit 203 and the display screen 204 are spaced in chessboard type staggered arrangement. As shown in Fig. 2(d), each imaging subunit of the imaging unit 203 and each display subunit of the display screen 204 are spaced from each other in staggered arrangement and arrayed in a chessboard type. As shown in Fig. 2(c), each imaging unit 203 and each display screen 204 respectively correspond to the first microlens unit 201 and the second microlens unit 202. Specifically, the first microlens array 201 and the second microlens array 202 are spaced from each other in staggered arrangement, and each imaging subunit of the first imaging unit 203 and each display subunit of the first display screen 204 are spaced from each other in staggered arrangement, presenting a chessboard type spaced arrangement manner as shown in Fig. 2(d).

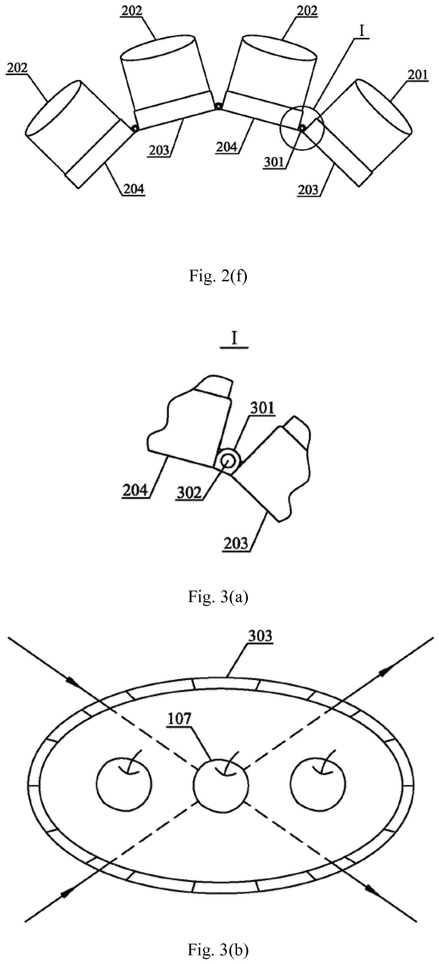

Fig. 2(e) and Fig. 2(f) illustrate another alternative arrangement manner of the above optical cloaking device 200. As shown in Fig. 2(e) and Fig. 2(f), a plurality of imaging units 203 and display screens 204 of the optical cloaking device are spaced together in staggered arrangement, each imaging unit 203 corresponds to a microlens unit 201 for condensing and constitutes a first module, each display screen 204 corresponds to a microlens unit 202 for displaying and constitutes a second module, the whole cloaking device consists of the first modules and the second modules spaced from each other in staggered arrangement. In this embodiment, the first modules and the second modules are in flexible connection to form the flexible optical cloaking device.

Specifically, as shown in Fig. 2(f), the bottom edges of the first module and the second module are connected by means of a hinge 301, and various modules are connected with each other by means of a plurality of hinges 301, thereby integrally forming an optical cloaking device having a mesh structure changeable in shape.

Fig. 3(a) illustrates an enlarged drawing of a connection structure of a flexible optical cloaking device according to the present disclosure. Fig, 3(a) illustrates a partial enlarged drawing of a hinge 301 in Fig. 2(f). According to one embodiment, the hinge 301 has a hollow spindle inside which an angle sensor 302 is arranged and configured to measure hinge rotation angles, calculate the current directions of all the modules through measured angle values and further determine that all the first modules shoot images in what directions, and all the second modules should display what images, thereby realizing the optical cloaking device having a certain flexibility.

Fig. 3(b) illustrates a fourth implementation of an optical cloaking device according to the present disclosure. In this implementation, a circular or closed cloaking device is implemented, and a cloaking effect when viewing from omni-direction and multiple angles may be implemented.

Specifically, the first modules and the second modules described in the third implementation are mutually connected together and may form a circular or closed cloaking device, as shown in Fig. 3(a), a plurality of local cloaking devices 301 are mutually spliced to form a circular cloaking device, and the circular cloaking device extends on a center line so as to acquire a cylindrical cloaking device having an upper opening and a lower opening, furthermore, a cloaking device having a closed space may also be formed, and the closed cloaking device may implement omni-directional cloaking effect in a three-dimensional space, for example, a spherical cloaking device. The implementation of this embodiment only lists one example of the circular cloaking device, and the circular cloaking device has a cloaking effect when 360-degree viewing in a horizontal plane, namely, the apple 107 is omni-directionally cloaked in the horizontal plane.

More preferably, a flexible material is adopted to prepare the above cloaking device, for example, soft plastic, namely, the first module and the second module are fixed by utilizing the soft plastic, the angle sensor 302 is arranged on the soft plastic at the joint of the first module and the second module, so that a cloaking device having better flexibility can be implemented, and then cloaking clothes for cloaking a human body may be further made.

Specifically, corresponding to the implementation in Fig. 1, the imaging unit 102 and the display screen 104 in Fig. 1 are prepared into be flexible so as to constitute a closed circular optical cloaking device. Corresponding to the implementation in Fig. 2(a), various elements located at the first side and various elements located at the second side constitute a closed circular shape in the above flexible connection manner so as to form a closed optical cloaking device.

In conclusion, the optical cloaking device of the present disclosure implements a real-time cloaking effect for different objects, has better adaptability to shapes of the objects, has a cloaking effect highly consistent with the real environment, also has a three-dimensional effect, and thus can be widely used in military fields and civilian fields.

The accompanying drawings are merely exemplary and are not drawn to scale. Although the present disclosure has been described in combination with preferred embodiments, it should be understood that the protective scope of the present disclosure is not limited to the embodiments described herein.

Other embodiments of the present disclosure are conceivable and comprehensible to those skilled in the art in combination with description and practice of the present disclosure disclosed herein. It is intended that the specification and embodiments are considered as exemplary only, with a true scope and spirit of the present disclosure being indicated by the following claims.

## Claims

1. An optical cloaking device, sequentially comprising along an incident direction of an optical path: a first microlens array for imaging, an imaging unit, a display screen, and a second microlens array for projecting the content displayed by the display screen to the outside, and further comprising an image processing unit, wherein
the first microlens array comprises a plurality of microlens units configured to focus a light beam from an external real scene;
the imaging unit is arranged on a focal plane of the first microlens array and is used for photosensitive images forming by using optical signals collected by the first microlens array;
the image processing unit is configured to acquire image data sensed by the imaging unit to obtain real scene images of different depths of field and display the real scene images on the display screen;
the display screen is arranged on a focal plane of the second microlens array and is configured to display an image processed by the image processing unit;
the second microlens array is configured to project an image displayed on the display screen to the outside; and
a target needing to be cloaked is positioned between the imaging unit and the display screen, and signal or data among the imaging unit, the image processing unit and the display screen are mutually transmitted in a wired or wireless manner.

2. An optical cloaking device, comprising: a first microlens array for imaging, a first imaging unit, a first image processing unit, a first display screen, and a second microlens array that are located at a first side; and a third microlens array, a second imaging unit, a second image processing unit, a second display screen, and a fourth microlens array that are located at a second side, wherein
the first microlens array comprises a plurality of microlens units configured to focus a light beam from an external real scene of the first side;
the first imaging unit is arranged on a focal plane of the first microlens array and is used for photosensitive images forming using an optical signal collected by the first microlens array;
the first image processing unit is configured to acquire image data sensed by the first imaging unit to obtain real scene images of different depths of field and display the real scene images on the second display screen;
the first display screen is configured to display an image processed by the second image processing unit;
the second microlens array is configured to project the image displayed on the first display screen to the outside of the first side; and
the third microlens array comprises a plurality of microlens units configured to focus a light beam from an external real scene of the second side;
the second imaging unit is arranged on a focal plane of the third microlens array and is used for photosensitive image forming using an optical signal collected by the third microlens array;
the second image processing unit is configured to acquire image data sensed by the second imaging unit to obtain real scene images of different depths of field and display the real scene images on the first display screen;
the second display screen is configured to display an image processed by the first image processing unit;
the fourth microlens array is configured to project the image displayed on the second display screen to the outside of the second side; and
a target needing to be cloaked is positioned between the first side and the second side, and signal or data among the first imaging unit, the first image processing unit, the first display screen, the second imaging unit, the second image processing unit and the second display screen are mutually transmitted in a wired or wireless manner.

3. The optical cloaking device according to claim 1 or 2, wherein a shape of the microlens unit is a circle, a regular hexagon or a rectangle.

4. The optical cloaking device according to claim 2, wherein the first imaging unit or the second imaging unit comprises a plurality of imaging subunits, each imaging subunit is respectively set as corresponding to each microlens unit of the first microlens array or the third microlens array, and each imaging subunit and a microlens unit corresponding to the imaging subunit constitute a first module.

5. The optical cloaking device according to claim 2 or 4, wherein the first display screen or the second display screen comprises a plurality of display subunits, each display subunit is respectively set as corresponding to each microlens unit of the second microlens array or the fourth microlens array, and each display subunit and a microlens unit corresponding to the display subunit constitute a second module.

6. The optical cloaking device according to claim 5, wherein the first module and the second module are spaced from each other in staggered arrangement.

7. The optical cloaking device according to claim 5, wherein the first module connects the second module by means of a hinge or in a flexible manner.

8. The optical cloaking device according to claim 2, wherein the first display screen or the second display screen is flexible.

9. The optical cloaking device according to claim 1, wherein the imaging unit and the display screen form a closed loop.

10. The optical cloaking device according to claim 2, wherein each element positioned at the first side and each element positioned at the second side form a closed loop.
